# EUROPEAN PATENT SPECIFICATION

(11) **EP 2 247 874 B1**
(45) Date of publication and mention of the grant of the patent: **10.08.2011**
(21) Application number: 09702333.7
(22) Date of filing: 15.01.2009
(51) Int. Cl.: F16H 63/18

(54) **GEAR SHIFT CONTROL DEVICE FOR A VEHICLE GEARBOX PROVIDED WITH A ROTATING DRUM HAVING A MAIN CAM AND AN AUXILIARY CAM**
GETRIEBESTEUERUNGSVORRICHTUNG FÜR EIN MIT EINER ROTIERENDEN TROMMEL MIT EINEM HAUPTNOCKEN UND EINEM ZUSATZNOCKEN VERSEHENES FAHRZEUGGETRIEBE
DISPOSITIF DE COMMANDE DE CHANGEMENT DE VITESSE POUR BOÎTE DE VITESSE DE VÉHICULE POSSÉDANT UN TAMBOUR ROTATIF POURVU D'UNE CAME PRINCIPALE ET D'UNE CAME AUXILIAIRE

(30) Priority: 16.01.2008 IT TO20080034
(43) Date of publication of application: 10.11.2010
(73) Proprietor: Sila Holding Industriale S.p.A., 10042 Nichelino (Torino) (IT); Automac Di Bigi Ing. Maurizio S.a.s., 41016 Novi Di Modena (MO) (IT)
(72) Inventor: MOURAD, Kamal, I-10123 Torino (IT); PANIZZA, Guido, I-10129 Torino (IT); BIGI, Maurizio, I-41016 Novi di Modena (Modena) (IT)
(74) Representative: Rondano, Davide
(86) International application number: PCT/IB2009/050146
(87) International publication number: WO 2009/090611

(56) References cited:
- EP-A- 1 333 201
- DE-A1- 19 543 645
- DE-A1- 19 920 440

## Description

The present invention refers to a gear shift control device for a vehicle gearbox, in particular for a motor vehicle, provided with a rotating and axially floating or sliding drum, as specified in the preamble of independent claim 1.

Modem mechanical gearboxes are generally of the type with permanently meshing gears, i.e. of the type in which the driving gearwheels carried by a primary shaft, or input shaft, permanently mesh with the respective driven gearwheels carried by one or more secondary shafts, or output shafts, and in which the driving gearwheels are rigidly connected for rotation with the primary shaft while the driven gearwheels are idly mounted on the secondary shaft or shafts. The engagement of a given gear is therefore brought about by coupling the idle gearwheel of the gear pair corresponding to the gear to be engaged for rotation with the respective shaft. To this end, to each idle gearwheel, or to each pair of adjacent idle gearwheels, there is associated a synchronizer having the function to synchronize, i.e. to equalize, the angular speeds of the idle gearwheel to be engaged and of the respective secondary shaft before completing the shift manoeuvre and starting therefore to transmit torque via the idle gearwheel in question.

A synchronizer typically comprises a driving part, which is rigidly connected for rotation by spline coupling with the respective shaft of the gearbox and which forms a conical mating surface intended to engage with a corresponding conical mating surface of the associated idle gearwheel, and a sleeve, which is rigidly coupled for rotation with the driving part, and hence with the respective shaft of the gearbox, and which is axially slidable in either direction by means of a respective shift fork. The sleeve of the synchronizer is provided, for each of the idle gearwheels associated thereto, with a toothing intended to mesh, as a result of the axial displacement of the sleeve, with a corresponding toothing of the idle gearwheel so as to make it possible to transmit torque between the idle gearwheel and the synchronizer, and hence between the idle gearwheel and the respective shaft of the gearbox.

A gear shift operation therefore comprises a first, synchronization step, during which the conical mating surface of the sleeve is brought into abutment against the corresponding conical mating surface of the idle gearwheel to be engaged, and a second, meshing step, during which the toothing of the sleeve is caused to mesh with the corresponding toothing of the idle gearwheel to be engaged. A given axial travel of the sleeve of the synchronizer corresponds to each of these steps.

In the common manually-operated mechanical gearboxes, the shift of a gear is controlled by the driver by means of a manual control lever, which allows to bring about each time the axial displacement of the shift fork associated to the synchronizer of the idle gearwheel of the gear pair corresponding to the desired gear.

In order to allow the driver to operate a common mechanical gearbox in sequential mode, gear shift control devices are known which comprise a rotating drum arranged parallel to the shafts of the gearbox and having on its outer cylindrical surface one or more guide grooves in which a plurality of studs, rigidly connected for translation each with a respective shift fork of the gearbox, are guided. The rotation of the drum is operated by an actuator unit, generally an electric motor coupled to a reduction gear, based on the commands imparted by the driver. The shape of the guide grooves of the drum is designed in such a manner as to cause, as a result of the rotation of the drum, a selective displacement of the studs, and hence of the shift forks, according to predefined operative modes to bring about each time the engagement of a given gear.

A gear shift control device for a vehicle gearbox provided with a rotating drum is known from German Patent application DE 19543645. According to this known example, the drum is mounted so as to float axially on a drive shaft operated by an electric motor. A pair of springs are arranged at the opposite axial ends of the drum to exert, as a result of an axial displacement of the drum in either direction, an axial biasing force tending to bring the drum back into a reference position, or neutral position. The use of an axially floating drum makes it possible to take up, by virtue of the axial displacement of the drum, the manufacturing tolerances of the gearbox. With the use in fact of an axially floating drum, should the shift fork arrive at the end-of-travel, i.e. should the gear shift operation be completed, before the drum has reached the predetermined angular position corresponding to the engagement of the gear in question, a further rotation of the drum would cause an axial displacement of the drum in the opposite direction to the shift direction, instead of causing the drum to push the fork in the shift direction.

However, the gear shift control device proposed in the aforementioned prior art document has the drawback of a large axial size, due to the fact that the drum has a plurality of guide grooves, each associated to a respective shift fork.

It is an object of the present invention to provide a gear shift control device for a vehicle gearbox, in particular for a motor-vehicle gearbox, which has a reduced axial size and which can be adapted to gearboxes with different engagement travels for the various gears.

This and other objects are fully achieved according to the invention by virtue of a gear shift control device for a vehicle gearbox, in particular for a motor-vehicle gearbox, in accordance with the preamble of claim 1, having the characteristics specified in the characterizing part of independent claim 1.

In short, the invention is based on the idea of using a gear shift control device having a rotating and axially floating drum, in which on the cylindrical lateral surface of the drum there are provided a first groove acting as a main cam arranged to cause a given axial displacement of the studs associated to the shift fingers and a second groove acting as an auxiliary cam arranged to cause an axial displacement of the drum, and hence of the studs associated to the shift fingers, which is added to the displacement caused by the main cam and which can be different for each gear so as to allow to modulate the engagement travel produced by the drum depending on the engagement travel actually required for each gear by the specific gearbox on which the control device is to be installed. The additional axial displacement of the drum imposed by the second groove is allowed by the fact that this groove engages a further stud which is stationary.

Preferably, the main cam formed by the first groove is configured so as to produce a throw corresponding to the average of the engagement travels required by all the gears of the gearbox to which the control device is intended, while the auxiliary cam formed by the second groove is configured so as to produce a variable throw such as to take up for each gear the difference between the engagement travel required and the engagement travel defined by the throw of the main cam.

The main advantage linked to the use of a second groove acting as an auxiliary cam is represented by the possibility to reduce the travel which must be produced by the main cam and therefore to reduce correspondingly the axial size of the drum.

Further characteristics and advantages of the invention will become apparent from the following detailed description, given purely by way of non-limiting example with reference to the appended drawings, in which:
Figure 1 is a perspective view of a gear shift control device for a motor-vehicle gearbox according to a preferred embodiment of the present invention;

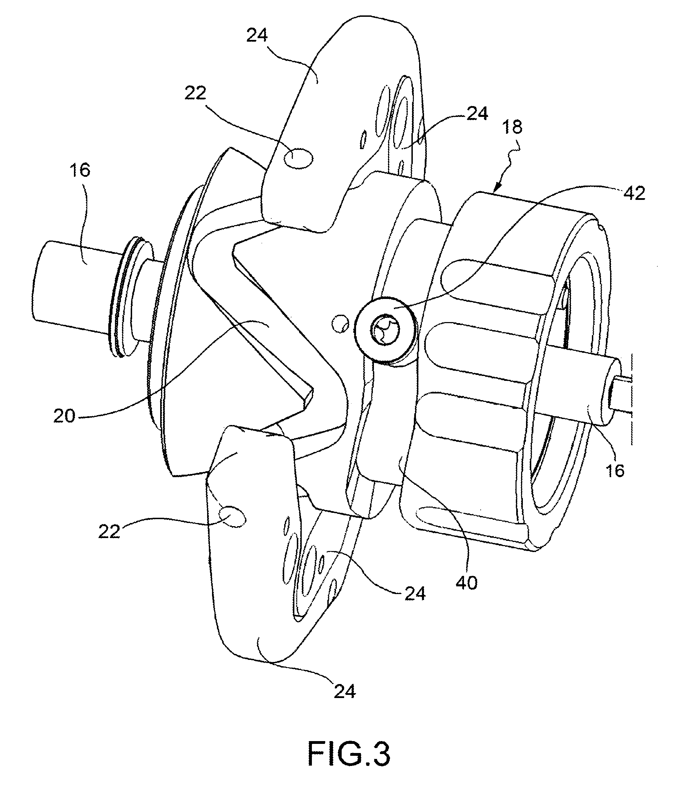

Figures 2 and 3 are perspective views showing the drum and a pair of shift fingers forming part of the control device of Figure 1; and
Figure 4 shows the development of the cylindrical skirt of the drum of the control device of Figure 1.

In the following description and claims, the terms "axial" and "radial" are to be intended as referred to the mounted condition of the gear shift control device onto the gearbox, in which condition the drum is arranged with its own axis of rotation parallel to the input and output shafts of the gearbox.

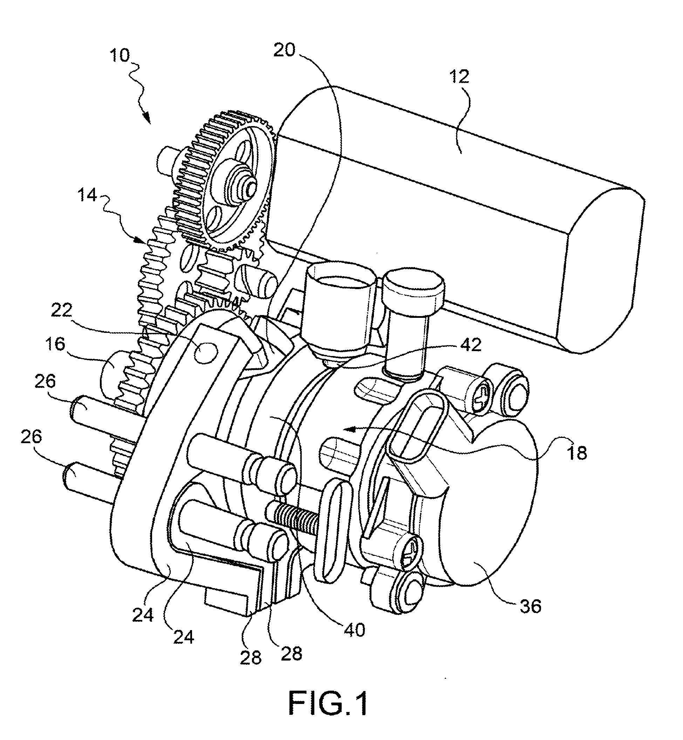

With reference first to Figure 1, a gear shift control device for a motor-vehicle gearbox (not shown) according to a first preferred embodiment of the present invention is generally indicated 10.

The control device 10 basically comprises:
an electric motor 12 or another equivalent actuator device;
a reduction gear 14;
a drive shaft 16 which can be caused to rotate by the electric motor 12 via the reduction gear 14; and
a rotating drum 18 connected for rotation with the drive shaft 16 but axially slidable relative to this latter.

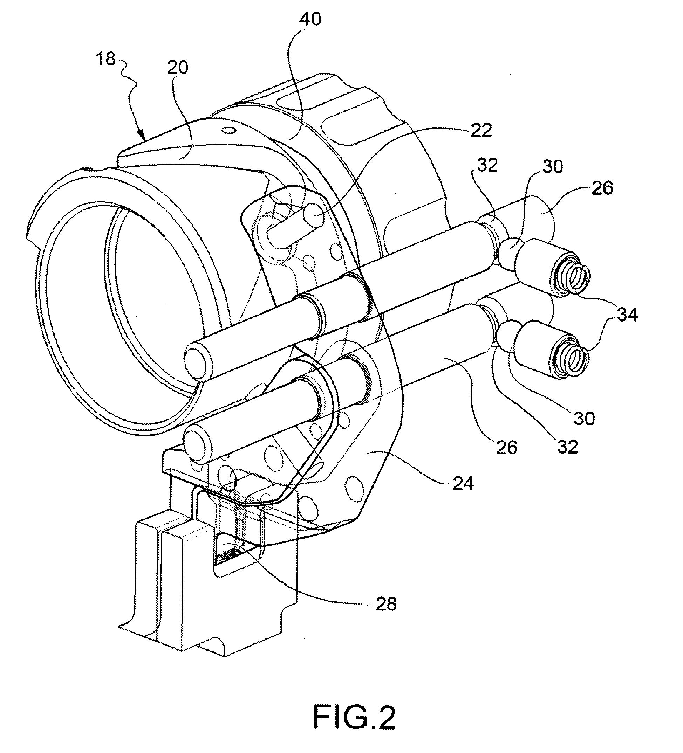

On the outer surface of the cylindrical skirt of the drum 18 a guide groove 20 is formed in which a plurality of studs 22, typically four studs (only one of which is shown in Figure 1 and only two of which are shown in Figure 2), are guided. Each stud 22 is drivingly connected for translation with a respective shift fork 24 which is secured to a respective slidable support rod 26 and is provided with a respective actuating finger 28 for actuation of a respective slidable engagement sleeve (per se known and not illustrated) of the gearbox.

The drum 18 has the function of converting the rotary motion imparted by the electric motor 12 to the drive shaft 16 via the reduction gear 14 into an axial translational motion of the studs 22, and hence of the shift forks 24, so as to control the engagement of the gears according to predetermined modes of operation. To this end, the groove 20 is suitably shaped to cause each time, as a result of the rotation of the drum 18 by a given angle in either direction, the displacement of a first stud 22 to disengage the engaged gear and the displacement of a second stud 22 (which may coincide with the first one) to engage another gear.

As mentioned above, the drum 18 is slidably mounted on the drive shaft 16 in order to allow to take up the manufacturing tolerances which cause the gear engagement travels to vary from one gearbox to another. On the other hand, the fact that the drum can slide axially may cause some problems in use. In particular, the drum may entrain with it, in the axial translational movement, also those studs, and hence those shift forks, which should instead remain in the neutral position. This may cause damages to the synchronizers of the gearbox. In order to avoid such a drawback, in the gear shift control device 10 according to the invention the groove 20 extends preferably not throughout the circumference of the drum, but only along a portion of circumference of sufficient length to produce the engagement travel of a gear, whereby each time only one of the studs 22 is guided in the groove 20, whereas all the remaining studs are left free.

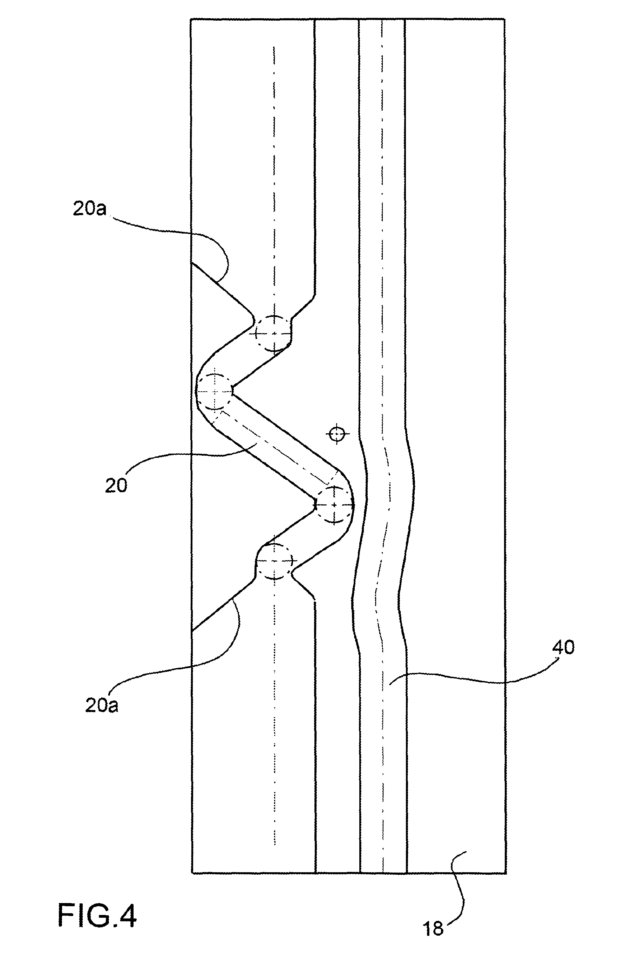

The groove 20 also has, at both its opposite ends, a lead-in portion 20a (Figure 4) for making the insertion of the stud 22 each time intended to engage the groove 20 easier.

Moreover, in order to avoid undesired displacements of the shift forks 24 which are connected to the studs 22 not engaged in the groove 20, and which are therefore in the neutral position, a spring-loaded reaction device (Figure 2) is provided for each support rod 26 and comprises a ball 30 adapted to engage in a groove 32 of the support rod and a spring 34 exerting a resilient force on the ball 30 tending to hold it in the groove 32.

The control device 10 is also provided (Figure 1) with an angular position sensor 36 for generating a signal indicative of the angular position of the drum 18 and for transmitting this signal to an electronic control unit (not shown) of the gearbox for feedback control of the position of the drum.

According to the invention, on the cylindrical outer surface of the drum 18 a second groove 40 is formed in which a further stationary stud 42 (mounted for instance onto a casing, not shown in the drawings, which encloses the control device) engages. As can be clearly seen in Figure 4, the groove 40 has an at least partially curved development, which is suitably shaped to cause, by virtue of the engagement with the stud 42, an axial displacement of the drum 18, and hence of the studs 22 engaging in the groove 20, as a result of the rotation of the drum about its own axis.

The axial displacement of the studs 22, and hence of the shift forks 24, is therefore determined by the sum of the axial displacements produced by the two grooves 20 and 40. A variable-throw cam system is thus obtained, in which the groove 20 acts as a main cam arranged to impose a given axial displacement of the studs 22, while the groove 40 acts as an auxiliary cam arranged to impose an additional axial displacement which may be different for each gear so as to modulate the engagement travel produced by the drum 18 depending on the engagement travel actually required for each gear by the specific gearbox onto which the gear shift control device 10 is to be installed.

In particular, the main cam formed by the groove 20 is configured so as to produce a throw corresponding to the average of the engagement travels required by all the gears of the gearbox to which the control device 10 is intended, while the auxiliary cam formed by the groove 40 is configured so as to produce a variable throw such as to take up for each gear the difference between the engagement travel required and the engagement travel defined by the throw of the main cam formed by the groove 20.

The main advantage given by the curved shape of the second groove 40 is represented by the possibility to reduce the travel which has to be produced by the main cam formed by the first groove 20, and therefore to reduce correspondingly the axial size of the drum 18.

Figure 4 also shows that the second groove 40 extends throughout the circumference of the drum 18 and includes a curved length at least partially overlapping with the first groove 20.

Naturally, the principle of the invention remaining unchanged, the embodiments and constructional details may vary widely with respect to those described and illustrated purely by way of non-limiting example.

For example, even though the description and the drawings illustrate an embodiment in which the groove acting as an auxiliary cam is formed by the lateral surface of the drum, while the stud engaging in that groove is provided on a stationary part (for instance a casing which encloses the control device), an alternative embodiment can also be conceived in which the groove acting as an auxiliary cam is formed in a stationary part (for instance in the above-mentioned casing) and the stud engaging in that groove is secured to the lateral surface of the drum so as to be drivingly connected for axial translation and for rotation therewith. Also in this case, in fact, the engagement between the stud and the groove acting as an auxiliary cam causes, as a result of the rotation of the drum about its own axis, an axial translational movement of the drum itself. Apart from that, all what has been stated above in connection with the embodiment illustrated in the drawings also applies to this variant of embodiment.

## Claims

1. Gear shift control device (10) for a vehicle gearbox, in particular for a motor-vehicle gearbox, comprising
a rotating drum (18) able to translate in the direction of its own axis (16), the drum (18) having a first groove (20) on its cylindrical lateral surface,
a plurality of first studs (22) guided in the first groove (20),
a plurality of shift forks (24) each drivingly connected for translation with a respective stud (22),
wherein the first groove (20) extends at least partially along a curved path suitably shaped in such a manner that the rotary movement of the drum (18) about its own axis (16) is converted into a translational movement of the studs (22), and hence of the shift forks (24), to control the engagement and the disengagement of the gears according to predetermined modes of operation,
**characterized in that** it comprises a second groove (40) and a second stud (42) engaging in the second groove (40), wherein one (40) between said second groove (40) and said second stud (42) is drivingly connected for axial translation and for rotation with the drum (18) and the other (42) is stationary, the second groove (40) having an at least partially curved development which is suitably shaped to cause, as a result of the engagement with the second stud (42), an additional axial displacement of the drum (18) overlapping with the axial displacement of the first studs (22) caused by the first groove (20) as a result of the rotation of the drum (18).

2. Device according to claim 1, wherein the second groove (40) is formed on the cylindrical lateral surface of the drum (18).

3. Device according to claim 1, wherein the second stud (42) is secured to the cylindrical lateral surface of the drum (18).

4. Device according to any of the preceding claims, wherein the second groove (40) is shaped so as to cause an additional axial displacement which differs from gear to gear.

5. Device according to any of the preceding claims, wherein the first groove (20) extends along a portion of the circumference of the drum (18) of such a length as to bring about each time the engagement of only one gear, whereby each time only one of the first studs (22) is guided in the first groove (20), whereas all the remaining studs (22) are disengaged from the first groove (20).

6. Device according to claim 5, wherein the first groove (20) has at its opposite ends respective lead-in portions (20a) to make the insertion of the stud (22) each time intended to engage that groove easier.

7. Device according to any of the preceding claims, further comprising an electric motor (12), a reduction gear (14) and a drive shaft (16) operable by the electric motor (12) via the reduction gear (14), the drum (18) being mounted on the drive shaft (16) so as to be connected for rotation therewith but free to slide axially relative thereto.

## Patentansprüche

1. Gangschaltsteuerungsvorrichtung (10) für ein Fahrzeuggetriebe, insbesondere für ein Kraftfahrzeuggetriebe, aufweisend
eine Drehtrommel (18), die in der Lage ist, sich in der Richtung ihrer eigenen Achse (16) zu verschieben, wobei die Trommel (18) eine erste Nut (20) auf ihrer zylindrischen Mantelfläche aufweist,
mehrere erste Zapfen (22), die in der ersten Nut (20) geführt sind,
mehrere Schaltgabeln (24), die jeweils zur gemeinsamen Verschiebung mit einem jeweiligen Zapfen (22) antriebsmäßig verbunden sind,
wobei sich die erste Nut (20) wenigstens teilweise entlang einer Kurvenbahn erstreckt, die in einer deratigen Weise geeignet gestaltet ist, dass die Drehbewegung der Trommel (18) um ihre eigene Achse (16) herum in eine Verschiebebewegung der Zapfen (22) und somit der Schaltgabeln (24) umgesetzt wird, um das Einlegen und das Herausnehmen der Gänge gemäß vorbestimmten Betriebsmodi zu steuern,
**dadurch gekennzeichnet, dass** sie eine zweite Nut (40) und einen zweiten Zapfen (42) aufweist, der in die zweite Nut (40) eingreift, wobei eine bzw. einer (40) von der zweiten Nut (40) und dem zweiten Zapfen (42) mit der Trommel (18) axial verschiebbar und drehfest antriebsmäßig verbunden ist und die bzw. der andere (42) ortsfest ist, wobei die zweite Nut (40) eine wenigstens teilweise gekrümmte Ausbildung aufweist, die geeignet gestaltet ist, um infolge der Eingriffsverbindung mit dem zweiten Zapfen (42) eine zusätzliche axiale Verlagerung der Trommel (18) zu bewirken, die sich der durch die erste Nut (20) infolge der Drehung der Trommel (18) bewirkten axialen Verlagerung der ersten Zapfen (22) überlagert.

2. Vorrichtung nach Anspruch 1, wobei die zweite Nut (40) auf der zylindrischen Mantelfläche der Trommel (18) ausgebildet ist.

3. Vorrichtung nach Anspruch 1, wobei der zweite Zapfen (42) an der zylindrischen Mantelfläche der Trommel (18) gesichert ist.

4. Vorrichtung nach einem beliebigen der vorhergehenden Ansprüche, wobei die zweite Nut (40) derart gestaltet ist, dass sie eine zusätzliche axiale Verlagerung bewirkt, die sich von Gang zu Gang unterscheidet.

5. Vorrichtung nach einem beliebigen der vorhergehenden Ansprüche, wobei sich die erste Nut (20) entlang eines Abschnitts des Umfangs der Trommel (18) von einer derartigen Länge erstreckt, um jeweils das Einlegen nur eines einzigen Ganges herbeizuführen, wobei jeweils nur einer der ersten Zapfen (22) in der ersten Nut (20) geführt ist, während alle restlichen Zapfen (22) mit der ersten Nut (20) außer Eingriff stehen.

6. Vorrichtung nach Anspruch 5, wobei die erste Nut (20) an ihren entgegengesetzten Enden jeweilige Einführabschnitte (20a) aufweist, um die Einführung des Zapfens (22) jedes Mal, wenn er dazu bestimmt ist, mit dieser Nut in Eingriff zu kommen, einfacher zu gestalten.

7. Vorrichtung nach einem beliebigen der vorhergehenden Ansprüche, die ferner einen Elektromotor (12), ein Untersetzungsgetriebe (14) und eine Antriebswelle (16) aufweist, die durch den Elektromotor (12) über das Untersetzungsgetriebe betrieben werden kann, wobei die Trommel (18) auf der Antriebswelle (16) derart montiert ist, dass sie mit dieser drehfest verbunden ist, jedoch axial relativ zu dieser frei gleiten kann.

## Revendications

1. Dispositif de commande de changement de vitesse (10) pour une boîte de vitesses de véhicule, en particulier pour une boîte de vitesses d'une automobile, comprenant :
un tambour rotatif (18) capable de translater dans la direction de son propre axe (16), le tambour (18) comportant une première rainure (20) sur sa surface latérale cylindrique,
une pluralité de premières tiges (22) guidées dans la première rainure (20),
une pluralité de fourchettes (24) reliées chacune de manière entraînante pour une translation à une tige (22) respective,
dans lequel la première rainure (20) s'étend au moins partiellement le long d'un trajet incurvé formé de manière appropriée de manière à ce que le mouvement de rotation du tambour (18) autour de son propre axe (16) soit converti en un mouvement de translation des tiges (22), et ainsi des fourchettes (24), pour commander l'engagement et le désengagement des vitesses selon des modes de fonctionnement prédéterminés,
**caractérisé en ce qu'**il comprend une deuxième rainure (40) et une deuxième tige (42) s'engageant dans la deuxième rainure (40), dans lequel l'une (40) entre ladite deuxième rainure (40) et ladite deuxième tige (42) est reliée de manière entraînante pour une translation axiale et pour une rotation avec le tambour (18) et l'autre (42) est fixe, la deuxième rainure (40) comportant un développement au moins partiellement incurvé qui est formé de manière appropriée pour provoquer, en conséquence de l'engagement avec la deuxième tige (42), un déplacement axial supplémentaire du tambour (18) se superposant au déplacement axial des premières tiges (22) provoqué par la première rainure (20) en conséquence de la rotation du tambour (18).

2. Dispositif selon la revendication 1, dans lequel la deuxième rainure (40) est formée sur la surface latérale cylindrique du tambour (18).

3. Dispositif selon la revendication 1, dans lequel la deuxième tige (42) est fixée à la surface latérale cylindrique du tambour (18).

4. Dispositif selon l'une quelconque des revendications précédentes, dans lequel la deuxième rainure (40) est formée de manière à provoquer un déplacement axial supplémentaire qui diffère d'une vitesse à une autre.

5. Dispositif selon l'une quelconque des revendications précédentes, dans lequel la première rainure (20) s'étend le long d'une partie de la circonférence du tambour (18) sur une longueur telle qu'elle entraîne à chaque fois l'engagement d'une seule vitesse, moyennant quoi, à chaque fois, une seule des tiges (22) est guidée dans la première rainure (20), tandis que toutes les tiges (22) restantes sont désengagées de la première rainure (20).

6. Dispositif selon la revendication 5, dans lequel la première rainure (20) comporte, à ses extrémités opposées, des parties d'entrée (20a) respectives pour faciliter l'insertion de la tige (22) à chaque fois destinée à s'engager dans cette rainure.

7. Dispositif selon l'une quelconque des revendications précédentes, comprenant en outre un moteur électrique (12), un engrenage de réduction (14) et un arbre d'entraînement (16) pouvant être actionné par le moteur électrique (12) par l'intermédiaire de l'engrenage de réduction (14), le tambour (18) étant monté sur l'arbre d'entraînement (16) de manière à être relié pour tourner avec celui-ci, mais libre de coulisser axialement par rapport à celui-ci.
